## Europäisches Patentamt
## European Patent Office
## Office européen des brevets

(11) Numéro de publication: **0 180 525**
**B1**

(12) # FASCICULE DE BREVET EUROPÉEN

(45) Date de publication du fascicule du brevet:
**16.12.87**

(51) Int. Cl.⁴: **B 64 D 45/02**

(21) Numéro de dépôt: **85402106.0**

(22) Date de dépôt: **31.10.85**

(54) Dispositif d'évacuation des charges électrostatiques d'un aéronef.

(30) Priorité: **02.11.84 FR 8416761**

(43) Date de publication de la demande:
**07.05.86 Bulletin 86/19**

(45) Mention de la délivrance du brevet:
**16.12.87 Bulletin 87/51**

(84) Etats contractants désignés:
**AT BE CH DE GB IT LI LU NL SE**

(56) Documents cité:
**FR-A-2 299 214**
**FR-A-2 388 456**
**US-A-3 579 033**

(73) Titulaire: **SEFTIM, 49, rue de la Bienfaisance,
F-94300 Vincennes (FR)**

(72) Inventeur: **Fevrot, Charles, 177, rue Lafayette,
F-75010 Paris (FR)**

(74) Mandataire: **Martin, Jean-Jacques, Cabinet
REGIMBEAU 26, Avenue Kléber, F-75116 Paris (FR)**

EP 0 180 525 B1

## Description

La présente invention concerne un dispositif d'évacuation des charges électrostatiques d'un aéronef.

On sait que les charges électrostatiques présentes sur la structure des aéronefs perturbent gravement les réceptions radio-electriques et nuisent en consequence à la radionavigation, donc à la sécurité des aéronefs eux-mêmes.

Par ailleurs, plus accessoirement, ces charges ont également entre autres pour inconvénient de créer des risques d'incendie résultant des étincelles qu'elles occasionnent.

Pour tenter d'éliminer ces charges, on a proposé différents dispositifs d'évacuation des charges électrostatiques. Ces dispositifs sont le plus souvent dénommés "déperditeurs de potentiel".

D'une façon générale, ces dispositifs d'évacuation des charges électrostatiques sont constitués de pointes ou de touffes de pointes électriquement conductrices, fortées par un corps suffort et à la structure de l'aéronef.

Un exemple de ces dispositifs d'évacuation de charges électrostatiques antérieurement proposés est illustré dans le brevet US-A-3 579 033.

Le problème maintenant posé est d'améliorer l'efficacité de ces dispositifs. Celle-ci en effet s'avère souvent insuffisante, notamment dans le cas des aéronefs rapides.

Ce problème est résolu selon la présente invention par le fait que le corps support du dispositif d'évacuation des charges électrostatiques comporte des moyen délimitant une pluralité de canaux définissant des veines d'écoulement d'air orientées dans la direction longitudinale de l'aéronef, et que le corps support est muni d'un même nombre de pointes disposées respectivement dans les canaux selon une distribution longitudinale variable d'un canal à l'autre.

Les moyens précités qui canalisent les veines d'écoulement d'air se comportent comme un convergent.

Il en résulte selon l'invention, d'une part que les pointes disposées dans les canaux sont léchées par un écoulement d'air dont la vitesse est supérieure à celle de l'aéronef, d'autre part que la zone de vitesse maximum de l'écoulement dans les canaux se déplace dans la direction longitudinale de ceux-ci en fonction de la vitesse absolue de l'aéronef (fonctionnement en convergent).

Par ailleurs, on a déjà montré que le courant évacué par une pointe augmente avec la vitesse d'écoulement d'air qui l'entoure; ainsi les pointes deviennent successivement actives, au moins à titre principal, selon la vitesse du véhicule.

Sans augmenter le coût des dispositifs d'évacuation de charges électrostatiques, selon l'invention, on renforce ainsi considérablement l'efficacité de ceux-ci, et ce en particulier pour des aéronefs rapides évoluant à des vitesses élevées variables dans une large gamme.

D'autres caractéristiques et avantages de la présente invention apparaîtront à la lecture de la description détaillée qui va suivre et en regard des dessins annexés, donnés à titre d'exemple non limitatif, et sur lesquels:

- la figure 1 représente une vue latérale schématique du dispositif d'évacuation des charges électrostatiques conforme à la présente invention,

- la figure 2 représente une vue de dessus du même dispositif,

- la figure 3 représente une vue en coupe longitudinale de ce dispositif selon un plan de coupe référencé III-III sur la figure 2,

- la figure 4 représente une vue en coupe transversale de ce dispositif selon un plan de coupe référencé IV-IV sur la figure 1,

- la figure 5 représente une section transversale de ce dispositif selon un plan de coupe référencé V-V sur la figure 3,

- la figure 6 représente une vue de dessus d'un embout support du dispositif d'évacuation de charges électrostatiques conforme à la présente invention, destiné à être fixé sur la structure de l'aéronef,

- la figure 7 représente une vue en coupe longitudinale de cet embout selon un plan de coupe référencé VII-VII sur la figure 6,

- la figure 8 représente une section transversale de cet embout selon un plan de coupe référencé VIII-VIII sur la figure 7,

- la figure 9 représente une autre section transversale de cet embout selon un plan de coupe référencé IX-IX sur la figure 7, et

- la figure 10 représente une vue d'un dard intégré à l'embout précité.

D'une façon générale, comme cela est représenté sur les figures, le dispositif d'évacuation de charges électrostatiques conforme à la présente invention comprend un corps souple allongé 10, des moyens 20 prévus sur le corps 10 qui délimitent des canaux définissant des veines d'écoulement d'air orientées dans la direction longitudinale de l'aéronef, des pointes 40, 41, 42 disposées respectivement dans les canaux et un embout support 100 portant le corps 10.

Sur les figures, l'axe du dispositif, qui coïncide avec sa direction longitudinale, est référencé O-O.

Le corps 10 comprend une gaine extérieure allongée 11, réalisée en un matériau souple électriquement isolant qui loge un jonc interne central allongé 30 en un matériau électriquement conducteur.

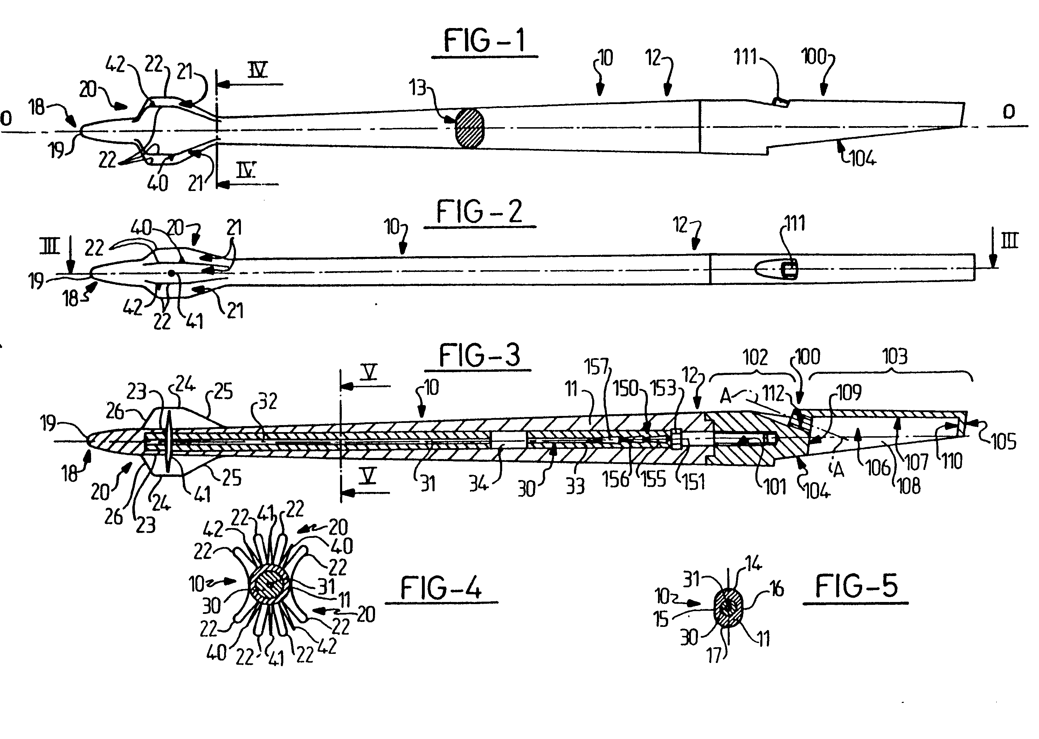

Comme illustré par la section transversale référencée 13 sur la figure 1, et par la figure 5, la gaine 11 possède une section transversale de forme générale ovale.

Plus précisément, la gaine 11 électriquement isolante est délimitée extérieurement par une calotte supérieure généralement hémicylindrique 14, deux plans latéraux parallèles 15 et 16 et une calotte inférieure généralement hémicylindrique 17.

La section de la gaine 11 décroit de l'extrémité avant 12 adjacente à l'embout 100 (et adjacente en position d'utilisation à l'aéronef) vers l'extrémité libre arrière 18 du dispositif d'évacuation des charges électrostatiques.

On remarquera qu'au niveau de cette extrémité libre arrière 18, la gaine 11, généralement tronconique, se termine par une calotte sensiblement sphérique 19.

Le jonc interne 30 réalisé en un matériau électriquement conducteur est généralement cylindrique et de section constante. Ce jonc interne 30 possède un alésage central 31 sur toute sa longueur, coaxial à l'axe O-O.

Plus précisément, comme cela est illustré en particulier sur la figure 3, le jonc interne 30 est divisé en deux portions séparées alignées et coaxiales, référencées 32 et 33 respectivement, entre lesquelles est insérée une résistance électrique série 34. Cette résistance 34 est bien entendu en contact avec les portions 32 et 33 respectivement.

Cette résistance peut par exemple posséder une impédance d'environ 22 MΩ.

Le jonc 30 s'étend sur la quasi-totalité de la longueur de la gaine 11. Toutefois, comme cela apparaît à l'examen de la figure 3, le jonc 30 accessible au niveau de l'extrémité avant 12 du corps 10 adjacente à l'embout 100 ne débouche pas à l'extérieur de la gaine 11 au niveau de l'extrémité arrière 18 du dispositif.

Les moyens 20 précités délimitant des canaux 21 qui définissent des veines d'écoulement d'air orientées dans la direction longitudinale de l'aéronef sont formés selon le mode de réalisation préférentiel représenté sur les figures, d'ailettes 22 situées au voisinage de l'extrémité arrière 18 du dispositif et qui s'étendent parallèlement à l'axe O-O du dispositif et radialement en regard de celui-ci.

Ces ailettes 22 possèdent la forme générale d'un trapèze.

Plus précisément, sur la figure 3, la grande base de ce trapèze parallèle à l'axe O-O du dispositif et adjacente à la surface supérieure de la gaine 11 est référencée 23, la petite base du trapèze parallèle à l'axe O-O est référencée 24, tandis que les côtés latéraux de ce trapèze, formant respectivement bord d'attaque et bord de fuite sont référencés 25 et 26. De préférence, l'inclinaison du bord attaque 25 par rapport à l'axe O-O du dispositif est inférieure à l'inclinaison du bord de fuite 26 par rapport à l'axe O-O.

Selon le mode de réalisation représenté sur les figures, deux groupes de quatre ailettes 22 diamétralement opposées respectivement sont ainsi prévus sur la gaine 11 à proximité de l'extrémité libre arrière 18 du dispositif. Chaque groupe de quatre ailettes délimite trois canaux définissant chacun une veine d'écoulement d'air 21.

Le nombre des ailettes 22 ci-dessus précisé ne doit cependant en aucune façon être considéré comme limitatif.

L'inclinaison relative entre deux ailettes adjacentes est par exemple de l'ordre de 30°, chaque groupe de quatre ailettes couvrant ainsi une ouverture angulaire de l'ordre de 90°. Ces valeurs données à titre d'exemple ne sont cependant pas limitatives.

Par ailleurs, une pointe 40, 41, 42 respectivement, est disposée dans chacun des canaux 21 précités, selon une distribution longitudinale variable d'un canal à l'autre -c'est-à-dire que les pointes 40, 41 et 42 sont décalées longitudinalement le long de l'axe O-O, de telle sorte que les pointes 40, 41, 42 deviennent successivement actives, au moins à titre principal, selon la vitesse de l'aéronef.

En effet, comme cela a été précédemment évoqué, les canaux 21 se comportant comme des convergents, la zone de vitesse maximum de l'écoulement dans les canaux se déplace dans la direction longitudinale de ceux-ci en fonction de la vitesse de l'aéronef.

La pointe principalement active à un instant donné correspond à la pointe la plus proche de cette zone de vitesse maximum de l'écoulement.

Par ailleurs, comme cela a été également rappelé précédemment, les canaux 21 formant convergents assurent un écoulement d'air autour des pointes 40, 41, 42 à une vitesse supérieure à celle de l'aéronef.

Selon le mode de réalisation représenté sur les figures, chaque pointe 41 est formée d'un élément rectiligne, de révolution autour d'un axe propre coincidant avec sa direction longitudinale et effilé à ses deux extrémités.

Chaque pointe 40, 41, 42 est enfichée à force dans la gaine 11 et le jonc interne 30, transversalement et radialement en regard de l'axe O-O, pour dépasser symétriquement de part et d'autre de la gaine 11.

Les extrémités de chaque pointe 40, 41, 42 débouchent ainsi dans des canaux respectifs 21 diamétralement opposés.

Selon le mode de réalisation représenté sur les figures, deux pointes adjacentes 40 et 41, ou 41 et 42 présentent une inclinaison relative de l'ordre de 30°.

Ainsi, l'écart angulaire maximal entre les pointes, c'est-à-dire l'écart angulaire entre les pointes 40 et 42 - est de l'ordre de 60°. Cette valeur, donnée à titre d'exemple, ne doit pas être considérée comme limitative. Toutefois, de préférence, cet écart angulaire maximal entre les pointes doit rester inférieur à 70° afin de permettre une installation du dispositif d'évacuation de charges électrostatiques sur l'aéronef telle que les pointes 40 à 42 s'étendent transversalement aux antennes de l'aéronef afin de ne pas perturber les transmissions.

L'embout support 100 allongé dans la direction de l'axe O-O est réalisé de préférence en métal. Cet embout est électriquement conducteur.

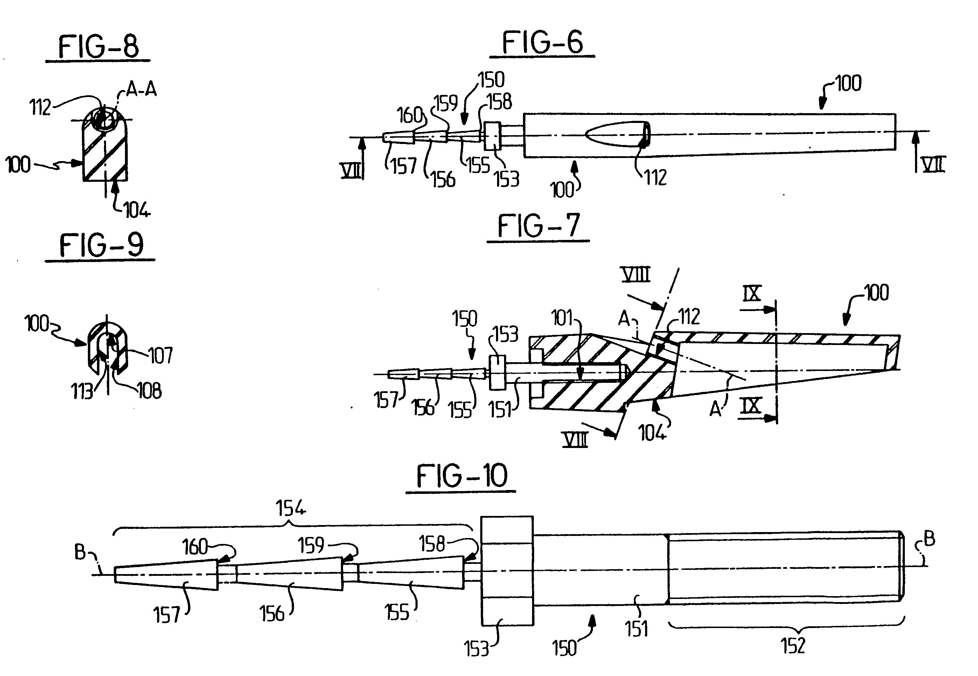

L'embout support 100 possède un alésage fileté 101 borgne et coaxial à l'axe O-O qui

débouche du c°oté du corps souple 10, et qui reçoit un insert formant dard 150 illustré en détail sur la figure 10.

Cet insert - dard 150 est engagé à force dans l'alésage central 31 du jonc électriquement conducteur 30 comme représenté sur la figure 3.

La structure de l'embout support 100 est par ailleurs classique et ne sera donc pas décrite en détail.

L'enveloppe de l'embout support 100, qui prolonge l'enveloppe de la gaine 11 du corps souple 10 et possède également une section générale transversale définie par deux génératrices respectivement supérieure et inférieure hémi-circulaires et deux génératrices latérales rectilignes parallèles, présente une première portion arrière 102 adjacente au corps souple 10 qui diverge en éloignement de cette dernière et une seconde portion avant 103 par l'intermédiaire de laquelle le dispositif est fixé sur la structure de l'aéronef qui converge en éloignement du corps souple 10 par rapport à l'axe O-O.

Au niveau de la portion 103, la partie inférieure de l'embout 100 est délimitée par un décrochement plan 104 qui converge vers l'axe O-O en éloignement du corps souple 10 et qui coupe cet axe O-O au niveau de la face transversale avant 105 de l'embout, opposée au corps 10.

L'embout 100 possède au niveau de cette portion 103 un logement 106 qui débouche au niveau du décrochement 104.

Ce logement 106 est délimité par une calotte supérieure cylindrique concave 107, deux parois latérales longitudinales planes 108, 113 parallèles entre elles et deux parois transversales planes 109, 110.

On remarquera que ces parois transversales 109 et 110 sont inclinées en regard d'un plan perpendiculaire à l'axe O-O, en rapprochement de la pointe libre arrière 18 du dispositif vers le décrochement 104.

Le logement 106 est destiné, de façon classique en soi, à recevoir un élément support complémentaire prévu sur la structure de l'aéronef.

Le dispositif est de plus immobilisé sur cet élément support grâce à une vis de pression 111 engagée dans un alésage rileté 112 d'axe A-A incliné en regard de l'axe O-O, en rapprochement de celui-ci vers la face transversale avant 105 de l'embout 100 opposée à l'extrémité libre arrière 18 du dispositif. L'alésage 112 débouche d'une part dans la paroi transversale arrière 109 du logement 106, d'autre part à la surface supérieure de l'embout 100.

L'insert 150 formant dard est réalisé également en un matériau électriquement conducteur, de préférence en métal, par exemple en acier.

Cet insert 150 possède de l'avant vers l'arrière une tige 151 généralement cylindrique, filetée sur une partie au moins de sa longueur en 152 pour être engagée dans l'alésage taraudé 101 de l'embout, une structure 153 de section transversale hexagonale ou équivalent avec laquelle est porté en prise un organe de serrage lors du montage pour bloquer l'insert 150 sur l'embout 100 et une tête 154 formant dard. Selon le mode de réalisation représenté sur les figures la tête 154 est composée plus précisément de trois éléments tronconiques adjacents 155, 156, 157 coaxiaux à l'axe B-B de l'insert et effilés en éloignement de la tige filetée 151.

Chacun des éléments 155, 156, 157 présente ainsi une surface transversale en dépouille 158, 159, 160 respectivement, en forme de couronne coaxiale à l'axe B-B et dirigée vers la tige filetée 151.

Ces surfaces 158, 159 et 160 permettent d'immobiliser le corps souple 10 sur l'embout 100 lorsque les éléments tronconiques 155, 156 et 157 formant dard sont engagés dans l'alésage de l'élément interne 33 du dispositif.

La présente invention est bien entendu susceptible de faire l'objet de nombreuses variantes de réalisation tant en ce qui concerne la structure du dispositif que la technologie de fabrication retenue.

A titre d'exemple, le jonc interne 30 électriquement conducteur peut être réalisé par extrusion tandis que la gaine externe 11 électriquement isolante est réalisée par moulage sur le jonc.

Comme cela a été précédemment évoqué, la présente invention permet d'améliorer très notablement l'efficacité des dispositifs d'évacuation des charges électrostatiques pour aéronefs, en particulier pour les aéronefs se déplaçant à des vitesses élevées variant dans une large gamme, puisque la répartition longitudinale des pointes dans les canaux permet de rendre celles-ci actives successivement pour des valeurs différentes de la vitesse de l'aéronef.

Par ailleurs, cette disposition proposée selon l'invention, permet de réaliser un dispositif d'évacuation standard des charges électrostatiques restant efficace pour des aéronefs se déplaçant à des vitesses très différentes.

Cela constitue bien entendu un avantage économique majeur.

**Revendications**

1. Dispositif d'évacuation des charges électrostatiques pur aéronef comportant des pointes (40, 41, 42) portées par un corps support (10) et destinées à être reliées à la structure de l'aeronef, caractérisé par le fait que le corps support (10) comporte des moyens (20) délimitant une pluralité de canaux (21) définissant des veines d'écoulement d'air orientées dans la direction longitudinale de l'aéronef, et que le corps support (10) est muni d'nombre de pointes (40, 41, 42) disposees respectivement dans les canaux selon une distribution longitudinale variable d'un canal à l'autre, de telle sorte que les pointes (40, 41, 42) deviennent successivement actives, au moins à titre principal, selon la vitesse de l'aéronef.

2. Dispositif d'évacuation de charges électrostatiques selon la revendication 1, caractérisé par le fait que les pointes (40, 41, 42) sont disposées sensiblement à l'extrémité (18) d'un corps souple allongé (10) destiné à être fixé sur la structure de l'aéronef.

3. Dispositif d'évacuation de charges électrostatiques selon la revendication 2, caractérisé par le fait que les pointes (40, 41, 42) sont sensiblement radiales en regard de l'axe longitudinal (O-O, du corps souple allongé (10).

4. Dispositif d'évacuation de charges électrostatiques selon l'une des revendications 2 ou 3, caractérisé par le fait que les pointes (40, 41, 42) traversent le corps souple (10) et dépassent symétriquement de part et d'autre de celui-ci.

5. Dispositif d'évacuation de charges électrostatiques selon l'une des revendications 1 à 4, caractérisé par le fait que l'inclinaison maximale entre les pointes (40, 41, 42) est inférieure ou égale à 70°.

6. Dispositif d'évacuation de charges électrostatiques selon l'une des revendications 1 à 5, caractérisé par le fait qu'il comprend trois pointes (40, 41, 42), l'inclinaison relative entre deux pointes adjacentes étant de l'ordre de 30°.

7. Dispositif d'évacuation de charges électrostatiques selon l'une des revendications 1 à 6, caractérisé par le fait que les pointes (40, 41, 42) sont adaptées pour s'étendre sensiblement perpendiculairement aux antennes de l'aéronef.

8. Dispositif d'évacuation de charges électrostatiques selon l'une des revendications 1 à 7, caractérisé par le fait qu'il comprend un corps support (10) possédant une gaine extérieure (11) électriquement isolante.

9. Dispositif d'évacuation de charges électrostatiques selon l'une des revendications 1 à 8, caractérisé par le fait que le corps support (10) possède une pluralité d'ailettes (22) définissant les canaux (21).

10. Dispositif d'évacuation de charges électrostatiques selon la revendication 8, caractérisé par le fait que la gaine extérieure (11) électriquement isolante loge un jonc interne électriquement conducteur (30) relié aux pointes (40, 41, 42) et destiné à être connecté à la structure de l'aéronef.

11. Dispositif d'évacuation de charges électrostatiques selon la revendication 10, caractérisé par le fait que le jonc interne électriquement conducteur (30) comporte une résistance série intégrée (34).

12. Dispositif d'évacuation de charges électrostatiques selon l'une des revendications 1 à 11, caractérisé par le fait qu'il comprend un embout support (100) par l'intermédiaire duquel le dispositif est fixé sur la structure de l'aéronef et qui reçoit un insert formant dard (150) destiné à être engagé dans le corps support (10).

13. Dispositif d'évacuation de charges électrostatiques selon la revendication 12 prise en combinaison avec l'une des revendications 10 et 11, caractérisé par le fait que le jonc interne électriquement conducteur (30) possède un alésage interne central pour recevoir l'insert formant dard.

**Patentansprüche**

1. Vorrichtung zum Evakuieren elektrostatischer Ladungen vom einem Flugzeug, die Spitzen (40, 41, 42) umfasst, die bei einem Trägerkörper (10) getragen sind und dazu bestimmt sind, mit der Struktur des Flugzeuges verbunden zu werden, dadurch gekennzeichnet, dass der Trägerkörper Einrichtungen (20) um fasst, die eine Vielzahl von Kanälen (21) begrenzen, welche in der Längsrichtung des Flugzeuges angeordnete Luftströmungsgänge definieren, und dass der Trägerkörper (10) ist mit einer gleichen Anzahl von Spitzen (40, 41, 42) versehen, die entsprechend in den Kanälen angeordnet sind gemäss einer von einem Kanal zum anderen variablen Längsverteilung, so dass die Spitzen (40, 41, 42) zum indest prinzipiellerweise, entsprechend der Geschwindigkeit des Flugzeuges, nacheinander aktiv werden.

2. Vorrichtung zum Evakuieren elektrostatischer Ladungen nach Anspruch 1, dadurch gekennzeichnet, daß die Spitzen (40, 41, 42) im wesentlichen am Ende (18) eines biegsamen langgegtreckten Körpers (10) angeordnet sind, welcher dazu bestimmt ist, auf der Struktur des Flugzeuges befestigt zu werden.

3. Vorrichtung zum Evakuieren elektrostatischer Ladungen nach Anspruch 2, dadurch gekennzeichnet, daß die Spitzen (40, 41, 42) im wesentlichen radial bezüglich der Längsachse (O-O) des biegsamen langgestreckten Körpers (10) sind.

4. Vorrichtung zum Evakuieren elektrostatischer Ladungen nach einem der Ansprüche 2 oder 3, dadurch gekennzeichnet, daß die Spitzen (40, 41, 42) den biegsamen Körper (10) durchqueren und beiderseits symmetrisch von diesem vorstehen.

5. Vorrichtung zum Evakuieren elektrostatischer Ladungen nach einem der Ansprüche 1 bis 4, dadurch gekennzeichnet, daß die maximale Neigung zwischen den Spitzen (40, 41, 42) kleiner oder gleich 70° ist.

6. Vorrichtung zum Evakuieren elektrostatischer Ladungen nach einem der Ansprüche 1 bis 5, dadurch gekennzeichnet, daß sie drei Spitzen (40, 41, 42) umfaßt, wobei die relative Neigung zwischen zwei benachbarten Spitzen in der Größenordnung von 30° ist.

7. Vorrichtung zum Evakuieren elektrostatischer Ladungen nach einem der Ansprüche 1 bis 6, dadurch gekennzeichnet, daß die Spitzen (40, 41, 42) angepaßt sind, um sich im wesentlichen senkrecht zu den Antennen des Flugzeuges zu erstrecken.

8. Vorrichtung zum Evakuieren elektrostatischer Ladungen nach einem der Ansprüche 1 bis 7, dadurch gekennzeichnet, daß sie einen Trägerkörper (10) umfaßt, der eine äußere elektrisch isolierende Hülle (11) besitzt.

9. Vorrichtung zum Evakuieren elektrostatischer Ladungen nach einem der Ansprüche 1 bis 8, dadurch gekennzeichnet, daß der Trägerkörper (10) eine Vielzahl von Flügeln (22) besitzt, welche die Kanäle (21) definieren.

10. Vorrichtung zum Evakuieren elektrostatischer Ladungen nach Anspruch 8, dadurch gekennzeichnet, daß in der äußeren elektrisch isolierenden Hülle (11) ein inneres elektrisch leitendes Rohr (30) untergebracht ist, das mit den Spitzen (40, 41, 42) verbunden und dazu bestimmt ist, an die Struktur des Flugzeuges angeschlossen zu werden.

11. Vorrichtung zum Evakuieren elektrostatischer Ladungen nach Anspruch 10, dadurch gekennzeichnet, daß das elektrisch leitende innere Rohr (30) einen integrierten Reihenwiderstand (34) umfaßt.

12. Vorrichtung zum Evakuieren elektrostatischer Ladungen nach einem der Ansprüche 1 bis 11, dadurch gekennzeichnet, daß sie ein Trägerübergangsrohr (100) umfaßt, durch dessen Zwischenschalten die Vorrichtung auf der Struktur des Flugzeuges befestigt ist und das einen stachelförmigen Einsatz (150) in sich aufnimmt, welcher bestimmt ist, mit dem Trägerkörper (10) zum Eingriff zu kommen.

13. Vorrichtung zum Evakuieren elektrostatischer Ladungen nach Anspruch 12 in Verbindung mit einem der Ansprüche 10 und 11, dadurch gekennzeichnet, daß das elektrisch leitende innere Rohr (30) eine innere zentrale Bohrung zur Aufnahme des stachelförmigen Einsatzes hat.

**Claims**

1. Electrostatic discharger for an aircraft comprising points (40, 41, 42) carried by a support body (10) and intended to be connected to the structure of the aircraft, characterized by the fact that the support body (10) comprises means (20) defining a plurality of channels (21) defining air flow streams orientated in the longitudinal direction of the aircraft and that the support body (10) is provided with the same number of points (40, 41, 42) arranged respectively in the channels according to a longitudinal distribution which may vary from one channel to the other, so that the points (40, 41, 42) become successively active, at least in the main, according to the speed to the aircraft.

2. Electrostatic discharger according to Claim 1, characterized by the fact that the points (40, 41, 42) are arranged substantially at the end (18) of an elongated flexible body (10) intended to be fixed to the structure of the aircraft.

3. Electrostatic discharger according to Claim 2, characterized by the fact that the points (40, 41, 42) are substantially radial with regard to the longitudinal axis (O-O) of the elongated flexible body (10).

4. Electrostatic discharger according to one of Claims 2 or 3, characterized by the fact that the points (40, 41, 42) pass through the flexible body (10) and project symmetrically on either side of the latter.

5. Electrostatic discharger according to one of Claims 1 to 4, characterized by the fact that the maximum inclination between the points (40, 41, 42) is less than or equal to 70°.

6. Electrostatic discharger according to one of Claims 1 to 5, characterized by the fact that it comprises three points (40, 41, 42), the relative inclination between two adjacent points being of the order of 30°.

7. Electrostatic discharger according to one of Claims 1 to 6, characterized by the fact that the points (40, 41, 42) are adapted in order to extend substantially perpendicularly with respect to the aerials of the aircraft.

8. Electrostatic discharger according to one of Claims 1 to 7, characterized by the fact that it comprises a support body (10) having an electrically insulating external sheath (11).

9. Electrostatic discharger according to one of Claims 1 to 8, characterized by the fact that the support body (10) has a plurality of fins (22) defining the channels (21).

10. Electrostatic discharger according to Claim 8, characterized by the fact that the electrically insulating external sheath (11) houses an electrically conducting internal rod (30) connected to the points (40, 41, 42) and intended to be connected to the structure of the aircraft.

11. Electrostatic discharger according to Claim 10, characterized by the fact that the electrically conducting internal rod (30) comprises an integrated series resistance (34).

12. Electrostatic discharger according to one of Claims 1 to 11, characterized by the fact that it comprises a support socket (100) by means of which the device is fixed to the structure of the aircraft and which receives an insert forming a spindle (150) intended to be engaged in the support body (10).

13. Electrostatic discharger according to Claim 12, taken in combination with one of Claims 10 and 11, characterized by the fact that the electrically conducting internal rod (30) has a central inner bore for receiving the insert forming the spindle.

FIG-1

FIG-2

FIG-3

FIG-4

FIG-5

FIG-8

FIG-6

FIG-9

FIG-7

FIG-10